# EUROPÄISCHE PATENTANMELDUNG

(11) **EP 2 963 712 A1**
(43) Veröffentlichungstag der Anmeldung: **06.01.2016**
(21) Anmeldenummer: 15001776.2
(22) Anmeldetag: 16.06.2015
(51) Int. Cl.: H01M 8/02, H01M 8/10, H01M 8/12

(54) **ELEKTROLYTSYSTEM FÜR EINE BRENNSTOFFZELLE**

(30) Priorität: 30.06.2014 DE 102014009675
(71) Anmelder: Forschungszentrum Jülich GmbH, 52425 Jülich (DE)
(72) Erfinder: Wippermann, Klaus, 52428 Jülich (DE); Korte, Carsten, 52428 Jülich (DE); Wackerl, Jürgen, 52428 Jülich (DE); Klafki, Katja, 52428 Jülich (DE)

(57) **Zusammenfassung**

Die Erfindung betrifft ein Protonen leitendes Fluid für den Einsatz in einem Elektrolytsystem für eine Brennstoffzelle, wobei das Protonen leitende Fluid wenigstens eine organische Base (B) und wenigstens eine starke Säure (HS) umfasst, wobei sowohl die organische Base (B) als auch die starke Säure (HS) einen Sulfonsäurerest aufweisen.

Das erfindungsgemäße Protonen leitende Fluid liegt in Form einer ionischen Flüssigkeit und/oder eines niedrig schmelzenden Salzes mit einem Schmelzpunkt unterhalb von 200 °C vor.

Das Protonen leitende Fluid weist wenigstens eine als Zwitterion vorliegende Base der allgemeinen Formel R₃N⁺-(CH₂)n-SO₃⁻, mit n = 1, 2 und R = -H, -CH₃, -C₂H₅, wobei die Reste R gleich oder unterschiedlich sein können, oder der allgemeinen Formel R₃P⁺-(CH₂)ₙ-SO₃⁻, mit n = 1, 2 und R = -CH₃, -C₂H₅, wobei die Reste R gleich oder unterschiedlich sein können, auf.

Als starke Säure sind F₃C-SO₃H (Trifluormethansulfonsäure,TfOH) und/oder F₃C-CF₂-SO₃H, (Perfluorethansulfonsäure) und/oder F₃C-SO₂-NH-SO₂-CF₃, (N,N-Bis(trifluormethansulfonyl)imid) und/oder F₃C-CF₂-SO₂-NH-SO₂-CF₂-CF₃, (N,N-Bis(perfluorethansulfonyl)imid) und/oder F₃C-SO₂-NH-SO₂-CF₂-CF₃, (Bis(perfluormethansulfonyl)imid) vorgesehen.

## Beschreibung

Die Erfindung betrifft ein Elektrolytsystem für eine Brennstoffzelle, insbesondere ein Elektrolytsystem für den Betriebstemperaturbereich von 120 - 200 °C als Ersatz von Phosphorsäure für eine Hochtemperatur-Polymerbrennstoffzelle (HT-PEFC).

### Stand der Technik

Für Hochtemperatur-Polymerbrennstoffzellen (HT-PEFC) werden derzeit als Elektrolytsysteme protonenleitende Membranen aus phosphorsäuredotiertem Polybenzimidazol (PBI) eingesetzt. Für diese HT-PEFCs ist regelmäßig ein Arbeitstemperaturbereich zwischen 120 und 200 °C vorgesehen. Die erhöhte Arbeitstemperatur ermöglicht den Betrieb mit wasserstoffhaltigen Brenngasen mit CO-Restgehalten von bis zu 1 Vol.-%. Dies ermöglicht vorteilhaft die Nutzung von Diesel oder Kerosin als flüssigem Energieträger bereits mit einem technisch einfachen einstufigen Reformer zur Brenngaserzeugung.

Die Phosphorsäure als Elektrolyt wird dabei homogen im Polymerkettennetzwerk des Polybenzimidazols aufgenommen und bildet so das Elektrolytsystem. Sie protoniert die basischen Gruppen des Polybenzimidazols (PBI) und wird über H-Brücken an dieses gebunden. Die mit (wässriger) Phosphorsäure gequollenen PBI-Membranen zeigen in dem für den Betrieb der HT-PEFC vorgesehenen Temperaturbereich eine ausreichende Protonenleitfähigkeit im Bereich von 0,1 S/cm und eine zu vernachlässigende Flüchtigkeit der freien Phosphorsäure. Die hohe Protonenleitfähigkeit, die auch noch bei sehr geringen Restwassergehalten vorliegt, ist auf eine sehr ausgeprägte Autoprotolyse der Phosphorsäure und den dann weiterhin möglichen kooperativen Protonentransportmechanismus zurückzuführen.

Die Anwesenheit von Phosphorsäure bzw. von Dihydrogenphosphatanionen verlangsamt allerdings erheblich die platinkatalysierte Sauerstoffreduktion an der Kathode. Bei einer typischen Betriebstemperatur zwischen 160 und 200 °C ist die Austauschstromdichte immer noch eine Größenordnung kleiner als bei einer herkömmlichen, zwischen 25 und 90°C betriebenen NAFION-basierten Brennstoffzelle. Aus verschiedenen experimentellen Studien geht hervor, dass Phosphorsäure bzw. Dihydrogenphosphat die für Sauerstoffreduktion elektrochemisch aktiven Zentren auf der Platinoberfläche blockiert.

Als Alternative zur Phosphorsäure kommen prinzipiell Protonen leitende ionische Flüssigkeiten (PIL) in Frage, da sie nicht auf Lösungsmittel, wie beispielsweise Wasser, angewiesen sind und daher auch bei erhöhten Temperaturen eingesetzt werden können, die für die Anwendung in einer Brennstoffzelle im Temperaturbereich von 120 bis 200 °C benötigt werden. Zudem zeigen ionische Flüssigkeiten typischerweise eine gute thermische Stabilität, geringe Flüchtigkeit und geringe Entflammbarkeit.

Protonen leitende ionische Flüssigkeiten wie [dema][TFO] (Diethylmethylammoniumtrifluoromethansulfonat) in Verbindung mit SPI-Membranen [1] oder binäre Ammoniumsalze, z. B. NH₄Tf + NH₄TFAc [2], wurden bereits als Elektrolyte in Brennstoffzellen eingesetzt. Derartige Systeme mit nur schwach sauren Protonen leitenden ionischen Flüssigkeiten zeigen in dem Temperaturbereich um 160 °C nur Leitfähigkeiten um 10⁻² S/cm.

### Aufgabe und Lösung

Die Aufgabe der Erfindung ist es, ein alternatives Elektrolytsystem für eine Brennstoffzelle bereit zustellen, welches insbesondere im Temperaturbereich von 120 bis 200 °C deutlich weniger mit den für die elektrochemische Sauerstoffreduktion verantwortlichen aktiven Zentren einer Platinkatalysatoroberfläche wechselwirkt als nach dem Stand der Technik gegeben ist, und damit eine Verbesserung der Sauerstoffreduktionskinetik am Platinkatalysator der Brennstoffzellenkathode ermöglicht.

Die Aufgabe der Erfindung wird gelöst durch ein Protonen leitendes Fluid als funktionelle Komponente in einem Elektrolytsystem gemäß Hauptanspruch.

Die Aufgabe der Erfindung wird ferner durch die Verwendung eines Protonen leitenden Fluids in einem Elektrolytsystem in einer Brennstoffzelle gemäß dem ersten Nebenanspruch gelöst.

Die Aufgabe der Erfindung wird weiterhin gelöst durch ein Elektrolytsystem für eine Brennstoffzelle umfassend wenigstens ein Protonen leitendes Fluid gemäß weiterem Nebenanspruch.

Vorteilhafte Ausgestaltungen des Protonen leitenden Fluids oder des Elektrolytsystems finden sich in den jeweils rückbezogenen Ansprüchen wieder.

### Gegenstand der Erfindung

Die Erfindung betrifft die Bereitstellung neuer, stark saurer, Protonen leitender Fluide auf Basis von Sulfonsäuren und einer Supersäure mit nur schwach koordinierend wirkenden Anionen und deren Verwendung in einem Elektrolytsystem für eine Brennstoffzelle. Besonders vorteilhaft sind diese Protonen leitenden Fluide für den Einsatz im Temperaturbereich von 120 bis 200 °C geeignet. Das Elektrolytsystem übernimmt die Funktion der elektrischen Isolation zwischen den Elektroden einer Brennstoffzelle, lässt jedoch die notwendige Ionenleitung zu.

Im Rahmen dieser Erfindung umfasst das Elektrolytsystem eine mechanisch stabile, elektrisch isolierende Matrix, die ein Protonen leitendes Fluid in deren Innerem physikalisch oder chemisch aufzunehmen vermag, welches hauptsächlich für die Ionenleitung verantwortlich ist.

Eine für ein Elektrolytsystem für eine Brennstoffzelle geeignete Matrix ist beispielsweise eine Membran auf Polybenzimidazol (PBI)-Basis. Eine weitere dafür geeignete Matrix ist eine anorganische, poröse Matrix umfassend Aluminiumoxid, Siliziumoxid oder Zirkoniumoxid oder einer Mischung dieser Oxide, wobei optional auch noch zusätzlich ein entsprechender Binder eingesetzt werden kann.

PBI-Membranen sind seit langem bekannt für ihre gute Stabilität sowohl in alkalischen Medien, als auch bei hohen Temperaturen. PBI wirkt gegenüber Elektronen und Ionen als Isolator. Der Imidazolring in der Wiederholeinheit des PBI kann jedoch bereits durch eine mittelstarke Säure wie Phosphorsäure protoniert werden. Das protonierte Polymermaterial kann einen großen Überschuss an Säure über H-Brücken binden. So wird durch die Zugabe von Phosphorsäure eine PBI-Membran zu einem guten Protonenleiter und damit zu einer aussichtsreichen Hochtemperatur-Protonenaustauschermembran für Brennstoffzellen.

Bei Verwendung einer PBI- bzw. einer auf PBI-Derivaten basierten Membran als Matrix dient das neue, stark saure Protonen leitende Fluid insbesondere als vollständiger oder zumindest teilweiser Ersatz für die bislang eingesetzte Phosphorsäure. Bei Verwendung einer anorganischen porösen Matrix, wie das bei der PAFC der Fall ist, wird für den Temperaturbereich unterhalb 200 °C ebenfalls bislang Phosphorsäure genutzt.

Die Aufgabe der Erfindung wird dadurch gelöst, dass wenigstens ein Protonen leitendes Fluid in Form einer stark sauren Protonen leitenden, ionischen Flüssigkeit oder eines niedrig schmelzenden Salzes (z. B. Glycintriflat), für den Einsatz als Elektrolyt in einem Elektrolytsystem für eine Brennstoffzelle bereitgestellt wird.

Als "ionische Flüssigkeiten" bezeichnet man Salze, die unterhalb von 100 °C flüssig vorliegen, während "feste Salze" einen Schmelzpunkt oberhalb von 100 °C aufweisen. Im Rahmen der Erfindung wird unter einem "niedrig schmelzenden Salz" ein Salz verstanden, welches oberhalb von 100 °C, aber unterhalb der maximalen Betriebstemperatur der Brennstoffzelle (Anwendungstemperatur) von ca. 200 °C schmilzt. Sofern die ionische Flüssigkeit oder das niedrig schmelzende Salz Wasser aufnimmt, kann es zur Hydratbildung kommen, wobei sich der Schmelzpunkt erhöht.

Beispiele für niedrig schmelzende Salze sind Alanintriflat, (H₃N⁺-CH₂(CH₃)-COOH)(CF₃-SO₃⁻) und Glycintriflat, (H₃N⁺-CH₂-COOH)(CF₃-SO₃⁻). Letzteres weist einen Schmelzpunkt von ca. 125 °C auf.

Das erfindungsgemäße Protonen leitende Fluid in Form einer stark sauren Protonen leitenden, ionischen Flüssigkeit oder eines niedrig schmelzenden Salzes setzt sich zusammen aus einer organischen Base (B) und einer starken Säure (HS), und ist dadurch gekennzeichnet, dass sowohl die organischen Base (B) als auch die starke Säure (HS) einen Sulfonsäurerest (R-SO₃⁻) aufweisen. Die Base (B) selbst liegt dabei als Zwitterion vor. Das bedeutet, dass das Basenmolekül zwei oder mehrere funktionelle Gruppen aufweist, von denen eine positiv und eine andere negativ geladen ist, so dass das Basenmolekül insgesamt elektrisch neutral ist. R kann dabei ein organischer Rest - unabhängig davon, welche funktionelle Gruppe darin enthalten ist - mit einer oder seltener mehreren freien Valenzen an einem Kohlenstoffatom sein.

Im Rahmen dieser Erfindung wir unter einer starken Säure (HS) mit einer Säurekonstanten Kₛ >1, d. h. mit einem pKₛ < 3 verstanden. Bei einer starken Säure ist das Gleichgewicht in HS = H⁺ + S⁻ hin zur rechten Seite verschoben. Das bedeutet, dass die Säure nahezu vollständig dissoziiert vorliegt.

Es hat sich herausgestellt, dass sowohl die Base (B) als auch die starke Säure (HS) auf Sulfonsäuren basieren müssen, da Sulfonsäureanionen (SO₃⁻) im Vergleich zu bisher eingesetzten Phosphat- (PO₄³⁻) und Carbonatanionen (CO₃²⁻) wesentlich schwächer auf einem Platinkatalysator adsorbieren, wie er typischerweise bei der HT-PEFC eingesetzt wird.

Die Base (B) sollte eine schwache Base sein, damit sie mit der sehr starken Säure (HS) eine starke konjugierte Säure HB⁺ ausbildet, die - analog zur Phosphorsäure - eine hohe Protonenleitfähigkeit ermöglicht. Im Falle eines basischen Polymers als Separator ist diese konjungierte Säure zudem auch in der Lage, dieses hinreichend zu protonieren.

Die Erfindung beruht auf der Beladung/Adsorption eines Polymers mit basischen Gruppen mit einer stark aziden protonen leitenden ionischen Flüssigkeit (PIL). Die PILs zeichnen sich dadurch aus, dass sie (a) über ein stark azides, eine Sulfonsäuregruppe tragendes Kation verfügen und (b) seine Kationen und Anionen nur wenig nukleophil sind und nur wenig mit dem Pt-Katalysator wechselwirken. Außerdem können durch Verwendung von Zwitterionen als konjugierte Base des Kations die intramolekularen Wechselwirkungen verstärkt werden und dadurch die Flüchtigkeit der PILs, insbesondere bei Mischungen mit einem Baseüberschuss, bei hohen Temperaturen reduziert werden.

Um diese Eigenschaften zu erreichen, müssen die Ausgangsstoffe besondere Eigenschaften aufweisen. Für das Kation sind das:
(i) ein niedriger pKs-Wert < 3,
(ii) geringe Nukleophilie des Kations bzw. seiner konjugierten Base,
(iii) konjugierte Base als Zwitterion,
(iv) Acidität über Sulfonsäuregruppe.

Für die konjugierte Säure des Anions sind es:
(i) sehr niedriger pKs-Wert < -3 (Supersäure),
(ii) geringe Nukleophilie,
(iv) Acidität über Sulfonsäuregruppe(n).

Die Erfindung betrifft insbesondere nicht eine direkte Protonierung eines basischen Polymers mit einer einfachen starken Säure, wie sie bereits vielfach in der Literatur beschrieben ist.

Nachfolgend werden zwei Gruppen angeführt, die im Sinne der Erfindung geeignete Basen (B) darstellen, ohne dass es sich dabei um eine abschließende Auflistung handelt.
1. Sulfonsäuren mit einer (Alkyl-)Ammoniumgruppe (R = H, CH₃, C₂H₅, wobei die Reste R jeweils gleich oder auch unterschiedlich sein können)
   alig.

   Formel: R₃N⁺-(CH₂)ₙ-SO₃⁻,

   mit n = 1, 2
   Darunter sind insgesamt 30 Varianten zu verstehen, dessen chemische Formeln und Bezeichnungen im Einzelnen der Tabelle1 zu entnehmen sind:
   Als besonders vorteilhafte Basen aus dieser Gruppe sind zu nennen:
   a. H₃N⁺-CH₂-CH₂-SO₃⁻ (2-Aminoethansulfonsäure, Taurin')
   b. (CH₃)₃N⁺-CH₂-CH₂-SO₃⁻ (2-Trimethylammoniumethansulfonat)
2. Sulfonsäuren mit einer Alkylphosphoniumgruppe (R = CH₃, C₂H₅, wobei die Reste R jeweils gleich oder auch unterschiedlich sein können)
   allg. Formel: R₃P⁺-(CH₂)ₙ-SO₃⁻, mit n = 1, 2
   Darunter sind insgesamt 12 Varianten zu verstehen, dessen chemische Formeln und Bezeichnungen im Einzelnen der Tabelle 2 zu entnehmen sind:
   Als besonders vorteilhafte Basen aus dieser Gruppe sind zu nennen:

Der Vorteil des Vorliegens eines Zwitterions als Base ist der, dass die unprotonierte Form der Base eine nur sehr geringe Flüchtigkeit bei Betriebstemperatur aufweist.

Vorteilhaft bei der Auswahl der Sulfonsäure ist eine kürzere Kohlenstoffkettenlänge, da bekannterweise die Schmelztemperatur und die Viskosität mit steigender Kohlenstoffkettenlänge ansteigen.

Bei der starken Säure (HS) handelt es sich um eine Säure bzw. eine Supersäure mit einem nur wenig koordinierenden Anion und damit auch nur geringen koordinativen Wechselwirkungen mit Metalloberflächen.

Nachfolgend werden zwei Gruppen angeführt, die im Sinne der Erfindung geeignete starke Säure (HS) darstellen, ohne dass es sich dabei um eine abschließende Auflistung handelt.
1. allg. Formel:

R-SO₃H

R = -CF₃, - C₂F₅
Zu dieser Gruppe gehören die nachfolgend aufgeführten 2 Varianten:
a. F₃C-SO₃H, (Trifluormethansulfonsäure,TfOH)
b. F₃C-CF₂-SO₃H, (Perfluorethansulfonsäure)
allg. Formel:

R-SO₂-NH-SO₂-R'

R, R' = -CF₃, C₂F₅, wobei die Reste R jeweils gleich oder auch unterschiedlich sein können.
Zu dieser Gruppe gehören die nachfolgend aufgeführten 3 Varianten:
a. F₃C-SO₂-NH-SO₂-CF₃, (N,N-Bis(trifluormethansulfonyl)imid)
b. F₃C-CF₂-SO₂-NH-SO₂-CF₂-CF₃, (N,N-Bis(perfluorethansulfonyl)imid)
c. F₃C-SO₂-NH-SO₂-CF₂-CF₃, (Bis(perfluormethansulfonyl)imid)

In dem erfindungsgemäßen Protonen leitenden Fluid können die Base und die starke Säure sowohl in einem stöchiometrischen Verhältnis (Molverhältnis B:HS = 1) als auch in einem leicht unterstöchiometrischen, bzw. überstöchiometrischen Verhältnis vorliegen. Im Rahmen dieser Erfindung haben sich stöchiometrische Verhältnisse (Molverhältnis B:HS) von 0,3 bis 3,0 als prinzipiell geeignet für ein Elektrolytsystem herausgestellt.

In einer vorteilhaften Ausgestaltung der Erfindung, kann durch Herstellung eines Eutektikums der ionischen Flüssigkeit/des niedrig schmelzenden Salzes mit der unprotonierten Base B, also der Aminosulfonsäure, der Schmelzpunkt des Elektrolyten vorteilhaft weiter abgesenkt und die Protonenleitfähigkeit auch bei geringem Restwassergehalt erhöht werden.

Ein typisches Molverhältnis für die ionische Flüssigkeit/das niedrig schmelzende Salz mit der unprotonierten Base B beträgt 1. Dies entspricht einem Molverhältnis B:HS = 2.

Als besonders vorteilhaften Bereich haben sich somit Molverhältnisse von B zu HS um 1,0 und um 2,0 herausgestellt, und dabei insbesondere die Molverhältnisse in den Bereichen von 0,8 bis 1,3 sowie und von 1,8 bis 2,3. Hier liegt das Protonen leitende Fluid also entweder nach außen hin neutral vor (Konzentration B = Konzentration HS) oder mit einem nahezu 100 %-igen Überschuss an Base (B) vor (Konzentration B = 2 x Konzentration HS).

Bei einem nichtstöchiometrischen Verhältnis von Base zu starker Säure (B zu HS ≠ 1)kann dies vorteilhaft zu einem eutektisch schmelzenden Gemisch führen. Die Leitfähigkeit wird in einem solchen Fall durch kooperative Protonenübertragung in der Regel nochmals gegenüber der stöchiometrischen Ausgestaltung erhöht. Aus diesem Grund sollte daher nicht nur die nach außen neutrale Kombination HB⁺S⁻, sondern auch die Base (B) als solche wenig flüchtig sein.

Ferner kann das Elektrolytsystem auch Mischungen aus verschiedenen Basen (B) und verschiedenen starken Säuren (HS) aufweisen. Die Kombination unterschiedlicher Basen (B) und starken Säuren (HS) eröffnet so eine Vielzahl von Kombinationsmöglichkeiten, so dass im Einzelfall gegebenenfalls mit Hilfe eines Fachmanns eine Optimierung des Elektrolytsystems an die jeweiligen Rahmenbedingungen erfolgen kann.

Nachfolgend werden beispielhaft einige erfindungsgemäße Protonen leitende Fluide aufgeführt, ohne dass es sich dabei um eine abschließende Auflistung handelt. Zudem sind für alle erfindungsgemäßen Protonen leitenden Fluide die Molverhältnisse (B/HS) variabel im Bereich von 0,3 bis 3,0 einstellbar.
- H₃N⁺-CH₂-CH₂-SO₃⁻ (2-Aminoethansulfonsäure) und F₃C-CF₂-SO₃H (Perfluorethansulfonsäure),
- (CH₃)₃N⁺-CH₂-CH₂-SO₃⁻ (2-Trimethylammoniumethansulfonat) und F₃C-SO₂-NH-SO₂-CF₂-CF₃ (Bis(perfluormethansulfonyl)imid),
- (CH₃)₃P⁺-CH₂-SO₃⁻ (Trimethylphosphoniamethansulfonat) und F₃C-SO₂-NH-SO₂-CF₃ (N,N-Bis(trifluormethansulfonyl)imid),
- (CH₃)₃P⁺-CH₂-CH₂-SO₃⁻ (2-Trimethylphosphoniaethansulfonat) und F₃C-SO₃H (Trifluormethansulfonsäure,TfOH),
- H(C₂H₅)₂N⁺-CH₂-SO₃⁻ (Diethylaminomethansulfonsäure) und F₃C-CF₂-SO₃H (Perfluorethansulfonsäure),
- H₂CH₃N⁺-CH₂-CH₂-CH₂-SO₃⁻ (3-Methylaminopropan-1-sulfonsäure) und F₃C-CF₂-SO₂-NH-SO₂-CF₂-CF₃ (N,N-Bis(perfluorethansulfonyl)imid),
- (CH₃)₂C₂H₅N⁺-CH₂-CH₂-CH₂-SO₃⁻ (3-Dimethylethylammoniumpropan-1-sulfonat) und F₃C-SO₃H (Trifluormethansulfonsäure,TfOH),
- (CH₃)₂C₂H₅P⁺-CH_{Z}-CH₂-SO₃⁻ (2-Dimethylphosphoniaethansulfonat) und F₃C-SO₂-NH-SO₂-CF₃ (N,N-Bis(trifluormethansulfonyl)imid).

Das erfindungsgemäße Protonen leitende Fluid erfüllt dabei insbesondere die folgenden Voraussetzungen:
a. Das Protonen leitende Fluid zeigt nur geringe Wechselwirkungen seiner Bestandteile (Kation/Anion bzw. Säure/konjugierte Base) mit den elektrochemisch aktiven Zentren einer platinkatalysierten Sauerstoffreduktionselektrode. Im Idealfall sind die Austauschstromdichten vergleichbar mit einer NAFION^{®}-basierten Niedertemperatur-Brennstoffzelle.
b. Das Protonen leitende Fluid kann durch (i) physikalische oder (ii) chemische Wechselwirkungen in einer Membran immobilisiert werden: (i) physikalische Aufnahme in einer porösen anorganischen oder organischen Membran durch hydrophile Wechselwirkung mit den Porenwänden, (ii) (Möglichst vollständige) Protonierung eines Polymers mit basischen Gruppen, weitere Aufnahme über H-Brücken.
c. Das Protonen leitende Fluid weist selbst eine ausreichende Protonenleitfähigkeit im Temperaturbereich zwischen 120 und 200 °C für den Betrieb in einer Hochtemperatur-Polymerbrennstoffzelle auf, und zwar im Bereich von 0,01 - 0,1 S/cm.
d. Das Protonen leitende Fluid zeigt eine ausreichend große elektrochemische Stabilität (Reduktion/Oxidation) an den Elektroden einer HT-Brennstoffzelle, welche in der Regel ein Potential im Bereich von ca. 0 V bis 1,5 V gegen eine Standard-Wasserstoffelektrode (SHE) aufweisen.
e. Das Protonen leitende Fluid weist eine ausreichend große thermische Stabilität und einen Masseverlust < 10 % über eine Betriebsdauer von 40.000 h bei der maximalen Betriebstemperatur (120 - 200 °C) der Brennstoffzelle auf.

Die vorliegende Erfindung lässt sich wie folgt zusammenfassen:
- Das erfindungsgemäße Protonen leitende Fluid kann vorteilhaft als Ersatz für Phosphorsäure in einer HT-PEFC oder einer PAFC eingesetzt werden.
- Das erfindungsgemäße Protonen leitende Fluid wird aus einer zwitterionischen organischen Base (B) und wenigstens einer starken Säure (HS) präpariert (HB⁺S⁻).
- Die Base (B) liegt als Zwitterion vor, um eine geringe Flüchtigkeit der unprotonierten Form zu gewährleisten.
- Die Base (B) ist eine schwache Base, die mit einer sehr starken Säure (HS) eine starke konjugierte Säure HB⁺ bildet, um so das basische Polymer hinreichend zu prötonieren;
- Die Base (B) und die starke Säure (HS) basieren auf Sulfonsäuren, da Sulfonsäureanionen (SO₃⁻) im Vergleich zu Hydrogenphosphat- und Carbonsäureanionen wesentlich schwächer auf dem Platinkatalysator adsorbieren.

### Spezieller Beschreibungsteil

Als alternative Elektrolyte für Phosphorsäure, die die vorgenannten Anforderungen (a) - (e) erfüllen, wurden neuartige protonenleitende Flüssigkeiten, bestehend aus Aminosulfonsäuren und einer sehr starken Säure identifiziert. Das Darstellungsschema der ionischen Flüssigkeit lautet:

B + HS → HB⁺ + S⁻

B bezeichnet die Aminosulfonsäure, die beispielsweise im Falle von Taurin, eine saure Sulfongruppe und eine basische Aminogruppe besitzt und als Zwitterion vorliegt:

H₃N⁺-(CH₂)₂-SO₃H ↔ H₃N⁺-(CH₂)₂-SO₃⁻ +H⁺ (pK_{s,1} = 1,5 [3])

H₃N⁺-(CH₂)₂-SO₃⁻ ↔ H₂N-(CH₂)₂-SO₃⁻ + H⁺ (pK_{s,2} = 8,74 [3])

Der isoelektrische Punkt liegt daher bei pHₗ = 5,12. Gegenüber einer sehr starken Säure ("Supersäure") verhält es sich wie eine schwache Base und wird an der Sulfonsäuregruppe protoniert. Die konjugierte Säure HB⁺ ist daher verhältnismäßig stark und in der Lage, das schwach basische Polymer PBI weitgehend zu protonieren, welches notwendig für eine hohe Elektrolytaufnahme ist. Das bei der Darstellung entstehende Anion S⁻ wirkt nur in geringem Maße komplexierend. Durch die Kombination nur gering komplexierender Anionen S- bzw. einer kationischen Säure HB⁺ sollen die Wechselwirkungen, die zur Blockierung aktiver Zentren auf der Kathode führt, möglichst minimiert werden.

Ein geeigneter Vertreter für eine solche starke Säure (HS) ist beispielsweise Trifluormethansulfonsäure. CF₃SO₃H ist eine sogenannte Supersäure. Ihr Anion, das Trifluormethansulfonat CF₃SO₃⁻, wird meist Triflat genannt.

Einfache organische Basen, die als neutrale Moleküle vorliegen, sind in dem Temperaturbereich zwischen 160 und 200 °C oft bereits relativ flüchtig. Durch Einsatz von Aminosulfonsäuren, die unprotoniert als Zwitterion HB⁺-X- vorliegen und aufgrund der Dipolladung stärkere zwischenmolekulare Wechselwirkungen zeigen, können jedoch vorteilhaft nennenswerte Verdampfungsverluste vermieden werden.

In einer vorteilhaften Ausgestaltung der Erfindung, kann durch Herstellung eines Eutektikums der ionischen Flüssigkeit/des organisches Salzes mit der unprotonierten Base B, also der Aminosulfonsäure, der Schmelzpunkt des Elektrolyten weiter abgesenkt und die Protonenleitfähigkeit auch bei geringem Restwassergehalt erhöht werden. Ein typisches Molverhältnis für das Protonen leitende Fluid (ionische Flüssigkeit oder niedrig schmelzendes Salz) mit der unprotonierten Base B beträgt beispielsweise 1.

Im Falle des nachfolgend offenbarten Ausführungsbeispiels mit Taurintrifluormethansulfonat sind für ein 1:1-Eutektikum insofern jeweils 100 g Taurin mit 37 ml Trifluormethansulfonsäure umzusetzen. Die Synthese dieses Eutektikums erfolgt analog der unten aufgeführten Beschreibung der Synthese des Ausführungsbeispiels mit Taurintrifluormethansulfonat.

Während im Falle einer 1:1-Stöchiometrie zwischen der Base B und der sehr starken Säure HS nur das binäre Salz HB⁺S⁻ vorliegt, kann im Falle einer Überstöchiometrie der Base der Protonentransport auch bei niedrigen Wassergehalten durch kooperative Protonenübertragung zwischen der konjugierten Säure HB⁺ und der Base B erfolgen (kooperativer Leitungsmechanismus, Grotthus-Mechanismus).

Das im Folgenden aufgeführte Ausführungsbeispiel mit Taurin als Aminosulfonsäure (B) und Trifluormethansulfonsäure als starke Säure (HS) zu Taurintrifluormethansulfonat (HB⁺S⁻) wurde präpariert und sowohl elektrochemisch als auch physikalisch-chemisch charakterisiert.

Taurintrifluormethansulfonat wurde dabei gemäß folgender Reaktionsgleichung präpariert:

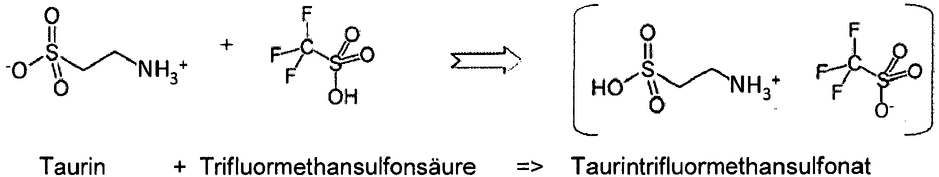

Dazu wurden 50 g Taurin in eine 1000 ml-Flasche gegeben und langsam in 800 ml dest. Wasser unter Rühren im Eisbad gelöst. Anschließend wurden 37 ml der Trifluormethansulfonsäure vorsichtig zugegeben. Nach Zugabe der Säure wurde der größte Teil des überschüssigen Wassers mit Hilfe eines Rotationsverdampfers in einem 60 °C warmen Wasserbad unter Vakuum mit Kühlfalle bei einer Rotationsgeschwindigkeit von 100 rpm und einer Temperatur von 60 °C entfernt. Es verblieben im Kolben eine Flüssigkeit und ein Kristallisat. Beides wurde in eine Abdampfschale transferiert und im Trockenschrank stufenweise auf bis zu 150 °C erhitzt, wobei sich die Kristalle auflösten und eine klare, hochviskose, stark saure Flüssigkeit, Taurintrifluormethansulfonat, zurückblieb. Dieses bildet bei Kontakt mit Wasser, beispielsweise bereits mit der normalen Luftfeuchtigkeit, ein Kristallisat, welches sich durch erneutes Trocknen bei 150 °C wieder verflüssigen lässt. Dies entspricht dem stark hygroskopischen Verhalten der Phosphorsäure.

Anschließend wurden 2 g des präparierten Taurintrifluormethansulfonats in einem Becherglas mit Hilfe eines Silikonbads auf 120 °C langsam erhitzt. Sobald das durch Kontakt mit Luftfeuchtigkeit teilweise auskristallisierte Taurintrifluormethansulfonat vollständig verflüssigt war, das heißt bei einer Temperatur von ca. 90 °C wurde ein 8 mm breiter, 100 mm langer und 65 µm dünner Streifen aus Poly(2,5-Benzimidazol) (ABPBI) in die Schmelze gegeben, etwa 24 Stunden darin belassen, danach im Trockenschrank auf 150 °C aufgeheizt und überschüssige, auf der Membranoberfläche befindliche Reste entfernt.

Dabei erhöhte sich die Masse des imprägnierten Streifens (81 mg) auf den doppelten Wert im Vergleich zum nichtimprägnierten Streifen aus Poly(2,5-Benzimidazol) (42 mg) und blieb bei 150 °C bis auf Änderungen des Wassergehalts konstant, was für die thermische Stabilität des Taurintrifluormethansulfonats spricht. Die thermische Stabilität wurde außerdem durch thermoanalytische Messungen bis zu einer Temperatur von 200 °C bestätigt.

Dann wurde mit Hilfe einer 4-Punktimpedanzmessung die elektrische Leitfähigkeit des mit Taurintrifluormethansulfonat imprägnierten ABPBI-Streifens in einer Klimakammer in einem Temperaturbereich von 25 - 120 °C bei relativen Luftfeuchten von 40 - 95 % gemessen.

Mit einem Abstand der spannungsführenden Platinkontakte von 10 mm und mit Hilfe der oben angegebenen Geometrie des Polymerstreifens ließen sich spezifische Leitfähigkeiten ermitteln. Bei 90 % und 95 % relativer Feuchte wurden spezifische Leitfähigkeiten bis zu 120 mS/cm erhalten. Leitfähigkeitsmessungen an wässrigen, 85 Gew.-%-iger Taurintriflatlösungen ergaben spezifische Leitfähigkeiten bis zu 80 mS/cm bei 160 °C. Diese Werte liegen in dem für den HT-Brennstoffzellenbetrieb akzeptablen Bereich.

Im Rahmen der Untersuchungen wurde auch ein Vergleich des Einflusses von Taurin und Phosphorsäure auf die Sauerstoffreduktionskinetik an einer Platinelektrode untersucht.

Dazu wurden jeweils 10⁻³ molare Elektrolytlösungen von Phosphorsäure und Taurin in 0,1 M Trifluormethansulfonsäure angesetzt und mit Hilfe einer rotierenden Platinscheibenelektrode deren Einfluss auf die Sauerstoffreduktionskinetik untersucht.

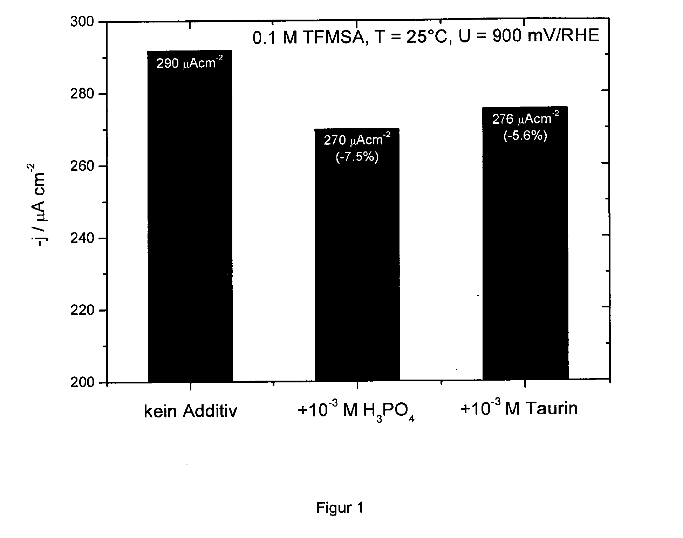

Wie Figur 1 am Beispiel der Stromdichten bei einem Elektrodenpotential von 900 mV (RHE) zeigt, hat Taurin im Vergleich zur Phosphorsäure eine um 25 % geringere inhibierende Wirkung auf die Sauerstoffreduktion, das heißt der Sauerstoffreduktionsstrom sinkt gegenüber der reinen 0,5 M Perchlorsäure statt um 20 mA/cm² vorteilhaft nur um 14 mA/cm² ab.

Zusätzliche zyklovoltametrische Messungen im Potential bereich von 0 bis 1,5 V (RHE = Reversible Wasserstoffelektrode) ergaben keine Degradation des Taurintriflatls.

In dieser Anmeldung zitierte Literatur:
[1] S.-Y. Lee, T. Yasuda, M. Watanabe, J. Power Sources, 195 (2010) 5909-5914.
[2] J.-P. Belieres, D. Gervasio, C.A. Angell, Chemical Communications, (2006) 4799-4801.
[3] J. G. Jacobsen, L.H. Smith, Physiological Reviews, 48 (1968) 424-511.

**Tabelle 1:**

| Übersicht über geeignete Basen (B): | |
|---|---|
| Sulfonsäuren mit (Alkyl-)Ammoniumgruppen. | |
| Chemische Formel (tautomere Form) | Bezeichnung |
| H₃N⁺-CH₂-SO₃⁻ | Aminomethansulfonsäure |
| H₂CH₃N⁺-CH₂-SO₃⁻ | Methylaminomethansulfonsäure |
| H(CH₃)₂N⁺-CH₂-SO₃⁻ | Dimethylaminomethansulfonsäure |
| (CH₃)₃N⁺-CH₂-SO₃⁻ | Trimethylammoniummethansulfonat |
| H₂C₂H₅N⁺-CH₂-SO₃⁻ | Ethylaminomethansulfonsäure |
| H(C₂H₅)₂N⁺-CH₂-SO₃⁻ | Diethylaminomethansulfonsäure |
| (C₂H₅)₃N⁺-CH₂-SO₃⁻ | Triethylammoniummethansulfonat |
| HCH₃C₂H₅N⁺-CH₂-SO₃⁻ | Methylethylaminomethansulfonsäure |
| CH₃(C₂H₅)₂N⁺-CH₂-SO₃⁻ | Methyldiethylammoniummethansulfonat |
| (CH₃)₂C₂H₅N⁺-CH₂-SO₃⁻ | Dimethylethylammoniummethansulfonat |
| H₃N⁺-CH₂-CH₂-SO₃⁻ | 2-Aminoethansulfonsäure (,Taurin') |
| H₂CH₃N⁺-CH₂-CH₂-SO₃⁻ | 2-Methylaminoethansulfonsäure |
| H(CH₃)₂N⁺-CH₂-CH₂-SO₃⁻ | 2-Dimethylaminoethansulfonsäure |
| (CH₃)₃N⁺-CH₂-CH₂-SO₃⁻ | 2-Trimethylammoniumethansulfonat |
| H₂C₂H₅N⁻-CH₂-CH₂-SO₃⁻ | 2-Ethylaminoethansulfonsäure |
| H(C₂H₅)₂N⁺-CH₂-CH₂-SO₃⁻ | 2-Diethylaminoethansulfonsäure |
| (C₂H₅)₃N⁺-CH₂-CH₂-SO₃ | 2-Triethylammoniumethansulfonat |
| HCH₃C₂H₅N⁺-CH₂-CH₂-SO₃⁻ | 2-Methylethylaminoethansulfonsäure |
| CH₃(C₂H₅)₂N⁺-CH₂-CH₂-SO₃⁻ | 2-Methyldiethylammoniumethansulfonat |
| (CH₃)₂C₂H₅N⁺-CH₂-CH₂-SO₃⁻ | 2-Dimethylethylammoniumethansulfonat |
| H₃N⁺-CH₂-CH₂-CH₂-SO₃⁻ | 3-Aminopropan-1-sulfonsäure ('Homotaurin') |
| H₂CH₃N⁺-CH₂-CH₂-CH₂-SO₃⁻ | 3-Methylaminopropan-1-sulfonsäure |
| H(CH₃)₂N⁺-CH₂-CH₂-CH₂-SO₃⁻ | 3-Dimethylaminopropan-1-sulfonsäure |
| (CH₃)₃N⁺-CH₂-CH₂-CH₂-SO₃⁻ | 3-Trimethylammoniumpropan-1-sulfonat |
| H₂C₂H₅N⁺-CH₂-CH₂-CH₂-SO₃⁻ | 3-Ethylaminopropan-1-sulfonsäure |
| H(C₂H₅)₂N⁺-CH₂-CH₂-CH₂-SO₃⁻ | 3-Diethylaminopropan-1-sulfonsäure |
| (C₂H₅)₃N⁺-CH₂-CH₂-CH₂-SO₃⁻ | 3-Triethylammoniumpropan-1-sulfonat |
| HCH₃C₂H₅N⁺-CH₂-CH₂-CH₂-SO3⁻ | 3-Methylethylaminopropan-1-sulfonsäure |
| CH₃(C₂H₅)₂N⁺-CH₂-CH₂-CH₂-SO₃⁻ | 3-Methyldiethylammoniumpropan-1-sulfonat |
| (CH₃)₂C₂H₅N⁺-CH₂-CH₂-CH₂-SO₃⁻ | 3-Dimethylethylammoniumpropan-1-sulfonat |

**Tabelle 2:**

| Übersicht über geeignete Basen (B): | |
|---|---|
| Sulfonsäuren mit einer (Alkyl-)Phosphoniumgruppe. | |
| Chemische Formel | Bezeichnung |
| (CH₃)₃P⁺-CH₂-SO₃⁻ | Trimethylphosphoniamethansulfonat |
| (C₂H₅)₃P⁺-CH₂-SO₃⁻ | Triethylphosphoniamethansulfonat |
| CH₃(C₂H₅)₂P⁺-CH₂-SO₃⁻ | Methyldiethylphosphoniamethansulfonat |
| (CH₃)₂C₂H₅P⁺-CH₂-SO₃⁻ | Dimethylethylphosphoniamethansulfonat |
| (CH₃)₃P⁺-CH₂-CH₂-SO₃⁻ | 2-Trimethylphosphoniaethansulfonat |
| (C₂H₅)₃P⁺-CH₂-CH₂-SO₃⁻ | 2-Triethylphosphoniaethansulfonat |
| CH₃(C₂H₅)₂P⁺-CH₂-CH₂-SO₃⁻ | 2-Methyldiethylphosphoniaethansulfonat |
| (CH₃)₂C₂H₅P⁺-CH₂-CH₂-SO₃⁻ | 2-Dimethylphosphoniaethansulfonat |
| (CH₃)₃P⁺-CH₂-CH₂-CH₂-SO₃⁻ | 3-Trimethylphosphoniapropansulfonat |
| (C₂H₅)₃P⁺-CH₂-CH₂-CH₂-SO₃⁻ | 3-Triethylphosphoniapropansulfonat |
| CH₃(C₂H₅)₂P⁺-CH₂-CH₂-CH₂-SO₃⁻ | 3-Methyldiethylphosphoniapropansulfonat |
| (CH₃)₂C₂H₅P⁺-CH₂-CH₂-CH₂-SO₃⁻ | 3-Dimethylphosphoniapropansulfonat |

## Patentansprüche

1. Protonen leitendes Fluid für den Einsatz in einem Elektrolytsystem für eine Brennstoffzelle, **dadurch gekennzeichnet,**
**dass** das Protonen leitende Fluid wenigstens eine organische Base (B) und wenigstens eine starke Säure (HS) mit einem pKₛ < 3 umfasst, wobei sowohl die organische Base (B) als auch die starke Säure (HS) einen Sulfonsäurerest aufweisen.

2. Protonen leitendes Fluid nach Anspruch 1, welches als ionische Flüssigkeit oder als eine Schmelze eines niedrig schmelzendes Salzes mit einem Schmelzpunkt unterhalb von 200 °C vorliegt.

3. Protonen leitendes Fluid nach Anspruch 1 bis 2, bei dem die Base (B) als Zwitterion vorliegt.

4. Protonen leitendes Fluid nach einem der Ansprüche 1 bis 3 mit einer Base gemäß der allgemeinen Formel R₃N⁺-(CH₂)ₙ-SO₃⁻, mit n = 1, 2 und R = -H, -CH₃, -C₂H₅, wobei die Reste R gleich oder unterschiedlich sein können.

5. Protonen leitendes Fluid nach vorhergehendem Anspruch umfassend H₃N⁺-CH₂-CH₂-SO₃⁻ (2-Aminoethansulfonsäure, 'Taurin') oder (CH₃)₃N⁺-CH₂-CH₂-SO₃⁻ (2-Trimethylammoniumethansulfonat) als Base.

6. Protonen leitendes Fluid nach Anspruch 1 bis 3 umfassend eine Base gemäß der allgemeinen Formel R₃P⁺-(CH₂)ₙ-SO₃⁻, mit n = 1, 2 und R = -CH₃, -C₂H₅, wobei die Reste R gleich oder unterschiedlich sein können.

7. Protonen leitendes Fluid nach Anspruch 6 umfassend (CH₃)₃P⁺-CH₂-SO₃⁻ (Trimethylphosphoniamethansulfonat) oder (CH₃)₃P⁺-CH₂-CH₂-SO₃⁻ (2-Trimethylphosphoniaethansulfonat) als Base.

8. Protonen leitendes Fluid nach Anspruch 6 umfassend F₃C-SO₃H, (Trifluormethansulfonsäure,TfOH) oder F₃C-CF₂-SO₃H, (Perfluorethansulfonsäure) als Säure.

9. Protonen leitendes Fluid nach Anspruch 6 umfassend F₃C-SO₂-NH-SO₂-CF₃ (N,N-Bis(trifluormethansulfonyl)imid) oder F₃C-CF₂-SO₂-NH-SO₂-CF₂-CF₃ (N,N-Bis(perfluorethansulfonyl)imid) oder F₃C-SO₂-NH-SO₂-CF₂-CF₃ (Bis(perfluormethansulfonyl)imid) als Säure.

10. Protonen leitendes Fluid nach einem der vorhergehenden Ansprüche 1 bis 9, bei dem das Molverhältnis von Base zu Säure im Bereich von 0,3 bis 3,0, insbesondere im Bereich von 0,8 bis 2,3 vorliegt, und besonders vorteilhaft 1,0 oder 2,0 beträgt.

11. Protonen leitendes Fluid nach einem der vorhergehenden Ansprüche 1 bis 10, welches im Temperaturbereich von 120 °C bis 200 °C als Fuid oder Schmelze vorliegt.

12. Elektrolytsystem für eine Brennstoffzelle umfassend eine Membran auf Polybenzimidazol (PBI)-Basis oder eine anorganische, poröse Matrix,
***dadurch gekennzeichnet,***
**dass** das Elektrolytsystem wenigstens ein Protonen leitendes Fluid gemäß einem der Ansprüche 1 bis 11 aufweist.

13. Elektrolytsystem für eine Brennstoffzelle nach vorhergehendem Anspruch 12, mit wenigstens einem Protonen leitenden Fluid umfassend H₃N⁺-CH₂-CH₂-SO₃⁻ (2-Aminoethansulfonsäure, Taurin) und/oder (CH₃)₃N⁺-CH₂-CH₂-SO₃⁻ (2-Trimethylammoniumethansulfonat) und/oder (CH₃)₃P⁺-CH₂-SO₃⁻ (Trimethylphosphoniamethansulfonat) und/oder (CH₃)₃P⁺-CH₂-CH₂-SO₃⁻ (2-Trimethylphosphoniaethansulfonat) als Base und F₃C-SO₃H, (Trifluormethansulfonsäure, TfOH) und/oder F₃C-CF₂-SO₃H, (Perfluorethansulfonsäure) und/oder F₃C-SO₂-NH-SO₂-CF₃, (N,N-Bis(trifluormethansulfonyl)imid) und/oder F₃C-CF₂-SO₂-NH-SO₂-CF₂-CF₃, (N,N-Bis(perfluorethansulfonyl)imid) und/oder F₃C-SO₂-NH-SO₂-CF₂-CF₃, (Bis(perfluormethansulfonyl)imid) als Säure.

14. Elektrolytsystem für eine Brennstoffzelle nach Anspruch 12 oder 13, mit einer anorganischen, porösen Matrix umfassend Aluminiumoxid, Siliziumoxid oder Zirkoniumoxid oder einer Mischung dieser Oxide.
